# EUROPÄISCHE PATENTSCHRIFT

(11) **EP 2 689 981 B1**
(45) Veröffentlichungstag und Bekanntmachung des Hinweises auf die Patenterteilung: **20.09.2017**
(21) Anmeldenummer: 12177683.5
(22) Anmeldetag: 24.07.2012
(51) Int. Cl.: B60W 20/00, B60W 10/06, B60W 10/30

(54) **Betriebsstrategie für das Leistungsmanagement eines Elektrofahrzeuges bei VKM Start Anforderung eines Range Extenders**
Operating strategy for the power management of an electric vehicle for the VKM start request of a range extender
Stratégie de fonctionnement pour la gestion de la puissance d'un véhicule électrique lors de la demande de démarrage d'un moteur à combustion interne d'un prolongateur d'autonomie

(43) Veröffentlichungstag der Anmeldung: 29.01.2014
(73) Patentinhaber: MAGNA STEYR Engineering AG & Co KG, 8041 Graz (AT)
(72) Erfinder: Passath, Markus, 8200 Gleisdorf (AT); Pongratz, Christian, 8093 St. Peter am Ottersbach (AT); Posch, Manfred, 8041 Graz (AT)
(74) Vertreter: Zangger, Bernd

(56) Entgegenhaltungen:
- WO-A1-2011/125184
- DE-A1-102009 027 001
- US-A1- 2006 021 809
- US-A1- 2007 124 037
- US-A1- 2010 071 975

## Beschreibung

### Gebiet der Erfindung

Die vorliegende Erfindung betrifft ein Verfahren zum Betreiben eines Hybridfahrzeuges, welches einen Verbrennungsmotor, eine Elektromaschine, einen elektrischen Speicher, sowie ein Steuersystem umfasst.

### Stand der Technik

Derartige Hybridfahrzeuge mit Verbrennungsmaschine und zumindest einer Elektromaschine sind bekannt. Die Elektromaschine kann dabei als primäre Antriebsmaschine eingerichtet sein und der Verbrennungsmotor beispielsweise bedarfsweise zugeschaltet werden, um den elektrischen Speicher aufzuladen und/oder um zusätzliche Antriebsenergie direkt bereitzustellen.

Für derartige Hybridfahrzeuge sind auch Betriebsverfahren bekannt, die einen optimalen Startzeitpunkt für die Verbrennungsmaschine berechnen und dabei insbesondere eine möglichst lange Fahrt mit reinem elektrischem Antrieb ermöglichen sollen. Hierzu werden oftmals auch Daten von Navigationsgeräten ausgewertet, um den erwarteten Streckenverlauf zu berücksichtigen.

Aus der DE 10 2010 025 335 A1 ist ein Verfahren zur Steuerung eines hybridischen Kraftfahrzeuges mit einer elektromotorischen, von einem elektrischen Akkumulator betriebenen und einer mit einem Generator zur Ladung des Akkumulators wirksam verbundenen Brennkraftmaschine sowie einer Steuereinheit zur Steuerung der Antriebseinheit bekannt, wobei die Brennkraftmaschine zumindest abhängig von einem der nachfolgenden Parameter gesteuert wird:
- einer abgerufenen Dauerleistung des Akkumulators,
- einer Temperatur des Akkumulators,
- von im Kraftfahrzeug auftretenden Vibrationen,
- einer Stillstandszeit der Brennkraftmaschine.

Aus der US 2010/0071975 A1 ist bekannt einen Zustand eines elektrischen Speichers zu überwachen und bei Erreichen eines Grenzwertes einer Verschlechterung des Speichers einen Verbrennungsmotor zu starten.

Ein ähnliches Verfahren lehrt auch die WO 2011/125184 A1, die eine zulässige elektrische Entladung eines Speichers bestimmt.

Bei den bekannten Betriebsverfahren wird oft auf aufwändige Weise ein günstiger Startzeitpunkt für die Verbrennungsmaschine berechnet.

### Zusammenfassung der Erfindung

Es ist eine Aufgabe der Erfindung, ein Verfahren zum Betreiben eines Hybridfahrzeuges anzugeben, dass auf einfache Weise eine gute Ausnutzung der Batteriekapazität ermöglicht. Weiters ist es eine Aufgabe der Erfindung den Fahrkomfort beim Zuschalten des Verbrennungsmotors zu erhöhen.

Die Lösung der Aufgabe erfolgt durch ein Verfahren zum Betreiben eines Hybridfahrzeuges, welches einen Verbrennungsmotor, eine Elektromaschine, einen elektrischen Speicher, sowie ein Steuersystem umfasst, wobei von dem Steuersystem bei Erfüllung einer ersten Startbedingung eine vom elektrischen Speicher aktuell verfügbare Leistung bestimmt wird und falls die vom elektrischen Speicher aktuell verfügbare Leistung über einem ersten Leistungsgrenzwert liegt der Verbrennungsmotor gestartet wird und falls die vom elektrischen Speicher aktuell verfügbare Leistung unter dem ersten Leistungsgrenzwert liegt die vom elektrischen Speicher aktuell verfügbare Leistung erneut bestimmt wird.

Erfindungsgemäß wird eine Startanforderung für die Verbrennungskraftmaschine, die aufgrund der Erfüllung einer ersten Startbedingung anliegt, nicht sofort umgesetzt, sondern zunächst geprüft, ob die für den Start des Verbrennungsmotors erforderliche Leistung von Seiten des elektrischen Speichers unter Berücksichtigung der aktuell von Verbrauchern, wie der Elektromaschine, abgezogenen Leistung auch vorhanden ist. In dem Fall dass die erforderliche Leistung zu diesem Zeitpunkt gegeben ist, wird der Verbrennungsmotor gestartet und hiermit die Startanforderung erfüllt. Falls die vorhandenen Leistungsressourcen des elektrischen Speichers jedoch nicht ausreichen, wird nicht sofort der Leistungsbezug der Verbraucher begrenzt um die Leistung für den Start des Verbrennungsmotors zur Verfügung zu stellen, da hierdurch üblicherweise der Fahrkomfort beeinträchtigt würde - beispielsweise durch Reduktion der aktuellen elektrischen Antriebsleistung. Vielmehr wird weiterhin geprüft, ob die erforderliche Leistung zu einem wenig späteren Zeitpunkt nicht schon erfüllt ist, da in vielen Fahrsituationen wenig später die benötigte elektrische Antriebsenergie geringer ist und hierdurch ein nur wenig verzögerter Start der Verbrennungskraftmaschine ermöglicht wird, ohne die Erfüllung der aktuellen Antriebsanforderungen zu beeinträchtigen.

Die laufende Bestimmung der vom elektrischen Speicher aktuell verfügbare Leistung und Überprüfung, ob die vom elektrischen Speicher aktuell verfügbare Leistung über dem ersten Leistungsgrenzwert liegt, wird vorteilhaft von einem Echtzeit-Steuersystem in einer Echtzeit-Schleife durchlaufen.

Die Startbedingung wird vorteilhaft so gewählt, dass noch eine ausreichende Sicherheit besteht, das Fahrzeug eine bestimmte Zeit lang rein elektrisch weiter betreiben zu können und den Verbrennungsmotor danach immer noch starten zu können.

Weiterbildungen der Erfindung sind in den abhängigen Ansprüchen, der Beschreibung sowie den beigefügten Zeichnungen angegeben.

Bevorzugt ist die erste Startbedingung erfüllt, wenn der aktuelle Ladezustand des elektrischen Speichers einen Ladungsgrenzwert unterschreitet. Als Startbedingung wird dabei der Ladezustand des elektrischen Speichers herangezogen, und der Ladungsgrenzwert unterhalb dessen der Start der Verbrennungsmaschine angefordert wird, vorzugsweise so festgelegt, dass der elektrische Speicher an diesem Ladungsgrenzwert noch genügend Kapazität aufweist, um noch eine bestimmte Zeit lang, beispielsweise einige Minuten, ein elektrisches Fahren und darauf folgendes Starten der Verbrennungsmaschine zu ermöglichen.

Besonders bevorzugt wird die vom elektrischen Speicher aktuell verfügbare Leistung abhängig von der aktuellen Verbraucher-Leistung bestimmt, mit der der elektrische Speicher von allen Verbrauchern belastet wird. Hierdurch wird der aktuelle Leistungskonsum durch alle Verbraucher, wie beispielsweise durch die Elektromaschine zum Antrieb des Fahrzeuges, in der Bestimmung der verfügbaren Leistung berücksichtigt.

Vorteilhaft wird die vom elektrischen Speicher aktuell verfügbare Leistung bestimmt als Differenz zwischen der maximalen Leistungsabgabe (State of Power) des elektrischen Speichers und der aktuellen Verbraucher-Leistung, mit der der elektrische Speicher von allen Verbrauchern belastet wird. Die maximale Leistungsabgabe des elektrischen Speichers (State of Power) wird üblicherweise von Batteriesteuergeräten laufend ermittelt.

In einer bevorzugten Ausgestaltung der Erfindung wird der erste Leistungsgrenzwert bestimmt durch Multiplikation einer für den Start des Verbrennungsmotors erforderlichen Leistung und einem ersten Sicherheitsfaktor. Der Leistungsgrenzwert, oberhalb dessen der Verbrennungsmotor sofort gestartet wird, wird also so gewählt, dass die im Voraus bestimmte Leistung, die für den Start des Verbrennungsmotors erforderlich ist, noch mit einem festgelegten Sicherheitsfaktor, üblicherweise größer als eins, multipliziert wird. Hierdurch wird sichergestellt, dass die verfügbare Leistung für den gesamten Startvorgang der Verbrennungsmaschine ausreicht.

Besonders bevorzugt wird die Abfolge, dass eine vom elektrischen Speicher aktuell verfügbare Leistung bestimmt wird und falls die vom elektrischen Speicher aktuell verfügbare Leistung über einem ersten Leistungsgrenzwert liegt der Verbrennungsmotor gestartet wird und falls die vom elektrischen Speicher aktuell verfügbare Leistung unter dem ersten Leistungsgrenzwert liegt, die vom elektrischen Speicher aktuell verfügbare Leistung erneut bestimmt wird, so oft wiederholt, bis entweder der Verbrennungsmotor gestartet wird oder eine maximale Wartedauer überschritten wird.

Demnach kann bevorzugt laufend überprüft werden, ob die erforderliche Leistung für den Start der Verbrennungsmaschine auch verfügbar ist, wobei im negativen Fall die aktuellen Verbraucher in deren Leistung noch nicht reduziert werden, sondern weiterhin auf ausreichende Leistung abgewartet wird.

Nach dem Erreichen einer festgelegten maximalen Wartedauer kann bevorzugt nicht weiter abgewartet werden, da ansonsten die Möglichkeit des Starts des Verbrennungsmotors nicht mehr gesichert ist. Die maximale Wartedauer kann vorteilhaft einige Minuten betragen, zum Beispiel ca. 2 Minuten, ca. 5 Minuten oder ca. 10 Minuten.

Bevorzugt wird daher, wenn die maximale Wartedauer überschritten wurde, die aktuelle Verbraucher-Leistung, mit welcher der elektrische Speicher von allen Verbrauchern belastet wird, reduziert, solange bis die vom elektrischen Speicher aktuell verfügbare Leistung über dem ersten Leistungsgrenzwert liegt, woraufhin der Verbrennungsmotor gestartet wird.

Die Reduktion der Verbraucher-Leistung erfolgt bevorzugt langsam, nämlich mit maximal 3 kW pro Sekunde. Hierdurch wird eine abrupte Verhaltensänderung des Fahrzeuges, insbesondere ein abrupter Abfall der aktuellen Antriebsleistung vermieden.

Bevorzugt wird, während der Verbrennungsmotor gestartet wird, die maximale Verbraucher-Leistung, mit welcher der elektrische Speicher von allen Verbrauchern belastet werden kann, auf einen zweiten Leistungsgrenzwert limitiert. Nachdem also durch die Steuerung des Fahrzeuges die Entscheidung zum tatsächlichen Start des Verbrennungsmotors getroffen wurde und der Startvorgang in Gang gesetzt ist, wird hierdurch sichergestellt dass auch während der Startphase des Verbrennungsmotors die übrigen Verbraucher nicht so viel Leistung vom elektrischen Speicher konsumieren, dass der Startvorgang gefährdet wäre.

Der zweite Leistungsgrenzwert wird bevorzugt analog zum ersten Leistungsgrenzwert bestimmt, nämlich durch Multiplikation der für den Start des Verbrennungsmotors erforderlichen Leistung und einem zweiten Sicherheitsfaktor. Der zweite Sicherheitsfaktor kann sich dabei vom ersten Sicherheitsfaktor unterscheiden. Er kann insbesondere auch eins betragen, da während der Startphase eine geringere Leistungsreserve erforderlich ist, als vor dem Start des Verbrennungsmotors.

Gemäß einer weiteren Ausgestaltung der Erfindung wird die Limitierung der maximalen Verbraucher-Leistung nach dem Starten des Verbrennungsmotors langsam zurückgenommen. Insbesondere kann die Rücknahme der Limitierung in Form einer Rampenfunktion, also schrittweise erfolgen. Auf diese Weise wird eine abrupte Leistungszunahme der Verbraucher und insbesondere des elektrischen Antriebs vermieden.

Besonders bevorzugt wird, wenn der Verbrennungsmotor gestartet wird, dieser auf mindestens 1000 U/min, bevorzugt auf mindestens 1500 U/min beschleunigt. Das Hochfahren des Verbrennungsmotors in hohe Drehzahlen bewirkt eine verbesserte Startakustik und ermöglicht eine Verringerung der Emissionen durch den Verbrennungsmotor.

### Kurzbeschreibung der Zeichnungen

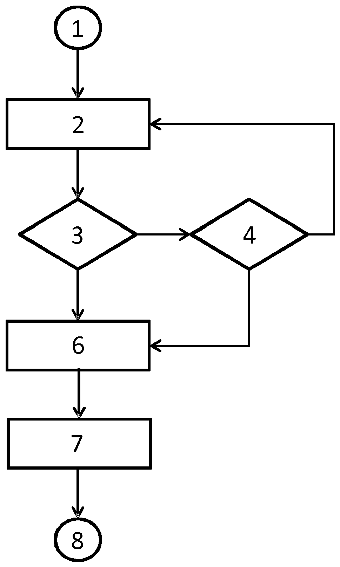

Die Erfindung wird im Folgenden beispielhaft unter Bezugnahme auf die Zeichnung beschrieben.
- Fig.: ist ein schematisches Ablaufdiagramm eines erfindungsgemäßen Verfahrens.

### Detaillierte Beschreibung der Erfindung

In der Fig. ist eine Ausführungsform eines erfindungsgemäßen Verfahrens zum Betreiben eines Hybridfahrzeuges schematisch dargestellt. Der Ablauf des Verfahrens wird dadurch in Gang gesetzt, dass die Erfüllung einer ersten Startbedingung (1) von einem Steuersystem, dass beispielsweise auch ein übergeordnetes Steuersystem sein kann, detektiert und nötigenfalls an das Steuersystem zur Ausführung des erfindungsgemäßen Verfahrens gemeldet wird. Diese erfüllte Startbedingung kann darin bestehen, dass der aktuelle Ladezustand des elektrischen Speichers des Hybridfahrzeuges einen vorgegebenen Ladungsgrenzwert unterschritten hat. Das Steuersystem bestimmt hierauf die vom elektrischen Speicher aktuell verfügbare Leistung (2), indem von der aktuell maximal verfügbaren Leistung des Speichers, also der aktuell möglichen Leistungsabgabe, die aktuell von allen Verbrauchern konsumierte Leistung abgezogen wird. Hierauf wird geprüft (3), ob die vom elektrischen Speicher aktuell verfügbare Leistung größer ist, als ein erster Leistungsgrenzwert, der im Wesentlichen durch die für den Start des Verbrennungsmotors erforderliche Leistung definiert ist, welche um einen Sicherheitsfaktor erhöht sein kann. Wurde auf diese Weise festgestellt, dass die verfügbare Leistung für den Start des Verbrennungsmotors ausreicht, wird daraufhin der Verbrennungsmotor gestartet (6). Bevorzugt wird während des Starts des Verbrennungsmotors die maximale Leistung der übrigen Verbraucher so begrenzt, dass die erforderliche Leistung für den gesamten Startvorgang des Verbrennungsmotors vom elektrischen Speicher sicher zur Verfügung gestellt werden kann. Erst ab dem Ende des Startvorganges des Verbrennungsmotors (7) wird diese Leistungslimitierung der übrigen Verbraucher langsam wieder zurückgenommen. Falls die Prüfung (3) ergibt, dass der elektrische Speicher aktuell nicht die erforderliche Leistung für den Start des Verbrennungsmotors bereitstellen kann, so wird weiters geprüft (4) ob eine vordefinierte maximale Wartedauer bereits überschritten wurde. Alternativ könnte selbstverständlich auch zuerst geprüft werden, ob die maximale Wartedauer bereits überschritten ist (4) und erst danach, beispielsweise nur in dem Fall dass die maximale Wartedauer noch nicht überschritten ist, geprüft werden, ob die aktuell verfügbare Leistung des elektrischen Speichers größer dem ersten Leistungsgrenzwert ist (3) und daher für den Start des Verbrennungsmotors ausreicht. Falls die aktuell verfügbare Leistung des elektrischen Speichers nicht ausreichend ist und die maximale Wartezeit nicht überschritten ist, so wird erfindungsgemäß erneut die vom elektrischen Speicher aktuell verfügbare Leistung (2) bestimmt und mit der erforderlichen Leistung verglichen (3) um festzustellen, ob zu diesem späteren Zeitpunkt die aktuell verfügbare Leistung des elektrischen Speichers für den Start des Verbrennungsmotors ausreicht.

Die Bestimmung, ob die maximale Wartedauer bereits überschritten ist (4) könnte erfindungsgemäß beliebig im Kreislauf der dargestellten Verfahrensschritte (2) und (3) angeordnet sein, also auch nach der Bestimmung der vom elektrischen Speicher aktuell verfügbaren Leistung (2) und vor der Prüfung ob die vom elektrischen Speicher aktuell verfügbare Leistung größer einem ersten Leistungsgrenzwert ist (3).

Die Erfindung gibt somit ein Verfahren zum Betreiben eines Hybridfahrzeuges an, das auf einfache Weise eine gute Ausnutzung der Batteriekapazität ermöglicht und den Fahrkomfort beim Zuschalten des Verbrennungsmotors erhöht.

### Bezugszeichenliste

- 1: Erfüllung einer ersten Startbedingung
- 2: Bestimmung der vom elektrischen Speicher aktuell verfügbaren Leistung
- 3: Prüfung ob vom elektrischen Speicher aktuell verfügbare Leistung größer einem ersten Leistungsgrenzwert
- 4: Prüfung ob die maximale Wartedauer überschritten wurde
- 6: Starten des Verbrennungsmotors
- 7: Ende des Startens des Verbrennungsmotors
- 8: Ende

## Patentansprüche

1. Verfahren zum Betreiben eines Hybridfahrzeuges, welches einen Verbrennungsmotor, eine Elektromaschine, einen elektrischen Speicher, sowie ein Steuersystem umfasst,
**dadurch gekennzeichnet, dass** von dem Steuersystem bei Erfüllung einer ersten Startbedingung (1) eine vom elektrischen Speicher aktuell verfügbare Leistung bestimmt wird (2) und falls die vom elektrischen Speicher aktuell verfügbare Leistung über einem ersten Leistungsgrenzwert liegt der Verbrennungsmotor gestartet wird (6) und falls die vom elektrischen Speicher aktuell verfügbare Leistung unter dem ersten Leistungsgrenzwert liegt die vom elektrischen Speicher aktuell verfügbare Leistung erneut bestimmt wird (2).

2. Verfahren nach Anspruch 1,
**dadurch gekennzeichnet, dass** die erste Startbedingung erfüllt ist wenn der aktuelle Ladezustand des elektrischen Speichers einen Ladungsgrenzwert unterschreitet.

3. Verfahren nach Anspruch 1 oder 2,
**dadurch gekennzeichnet, dass** die vom elektrischen Speicher aktuell verfügbare Leistung abhängig von der aktuellen Verbraucher-Leistung bestimmt wird, mit der der elektrische Speicher von allen Verbrauchern belastet wird.

4. Verfahren nach Anspruch 3,
**dadurch gekennzeichnet, dass** die vom elektrischen Speicher aktuell verfügbare Leistung bestimmt wird als Differenz zwischen der maximalen Leistungsabgabe des elektrischen Speichers und der aktuellen Verbraucher-Leistung, mit der der elektrische Speicher von allen Verbrauchern belastet wird.

5. Verfahren nach Anspruch nach zumindest einem der vorhergehenden Ansprüche,
**dadurch gekennzeichnet, dass** der erste Leistungsgrenzwert bestimmt wird durch Multiplikation einer für den Start des Verbrennungsmotors erforderlichen Leistung und einem ersten Sicherheitsfaktor.

6. Verfahren nach zumindest einem der vorhergehenden Ansprüche,
**dadurch gekennzeichnet, dass** die Abfolge, dass eine vom elektrischen Speicher aktuell verfügbare Leistung bestimmt wird (2) und falls die vom elektrischen Speicher aktuell verfügbare Leistung über einem ersten Leistungsgrenzwert liegt der Verbrennungsmotor gestartet wird (6) und falls die vom elektrischen Speicher aktuell verfügbare Leistung unter dem ersten Leistungsgrenzwert liegt die vom elektrischen Speicher aktuell verfügbare Leistung erneut bestimmt wird (2), entsprechend Anspruch 1, so oft wiederholt wird, bis entweder der Verbrennungsmotor gestartet wird oder eine maximale Wartedauer überschritten wird.

7. Verfahren nach Anspruch 6,
**dadurch gekennzeichnet, dass**, wenn die maximale Wartedauer überschritten wurde, die aktuelle Verbraucher-Leistung, mit welcher der elektrische Speicher von allen Verbrauchern belastet wird, reduziert wird, solange bis die vom elektrischen Speicher aktuell verfügbare Leistung über dem ersten Leistungsgrenzwert liegt, woraufhin der Verbrennungsmotor gestartet wird.

8. Verfahren nach Anspruch 7,
**dadurch gekennzeichnet, dass** die Reduktion der Verbraucher-Leistung maximal 3 kW pro Sekunde beträgt.

9. Verfahren nach zumindest einem der vorhergehenden Ansprüche,
**dadurch gekennzeichnet, dass**, während der Verbrennungsmotor gestartet wird, die maximale Verbraucher-Leistung, mit welcher der elektrische Speicher von allen Verbrauchern belastet werden kann, auf einen zweiten Leistungsgrenzwert limitiert wird.

10. Verfahren nach Anspruch 9,
**dadurch gekennzeichnet, dass** der zweite Leistungsgrenzwert bestimmt wird durch Multiplikation der für den Start des Verbrennungsmotors erforderlichen Leistung und einem zweiten Sicherheitsfaktor.

11. Verfahren nach Anspruch 9,
**dadurch gekennzeichnet, dass** die Limitierung der maximalen Verbraucher-Leistung nach dem Starten des Verbrennungsmotors langsam zurückgenommen wird.

12. Verfahren nach zumindest einem der vorhergehenden Ansprüche,
**dadurch gekennzeichnet, dass**, wenn der Verbrennungsmotor gestartet wird, dieser auf mindestens 1000 U/min, bevorzugt auf mindestens 1500 U/min beschleunigt wird.

## Claims

1. Method for the operation of a hybrid vehicle that comprises an internal combustion engine, an electrical machine, an electrical storage device and a control system,
**characterized in that**
the power currently available from the electrical storage device is determined (2) by the control system on fulfilment of a first starting condition (1) and if the power currently available from the electrical storage device exceeds a first power threshold the internal combustion engine is started (6), and if the power currently available from the electrical storage device is less than the first power threshold the power currently available from the electrical storage device is determined again (2).

2. Method according to Claim 1,
**characterized in that**
the first starting condition is fulfilled when the current state of charge of the electrical storage device is less than a charge threshold value.

3. Method according to Claim 1 or 2,
**characterized in that**
the power currently available from the electrical storage device is determined depending on the current load power with which the electrical storage device is loaded by all loads.

4. Method according to Claim 3,
**characterized in that**
the power currently available from the electrical storage device is determined as the difference between the maximum power output of the electrical storage device and the current load power, with which the electrical storage device is loaded by all loads.

5. Method according to claim according to at least one of the preceding claims,
**characterized in that**
the first power threshold is determined by multiplication of a power required to start the internal combustion engine and a first safety factor.

6. Method according to at least one of the preceding claims,
**characterized in that**
the sequence whereby a power currently available from the electrical storage device is determined (2) and if the power currently available from the electrical storage device exceeds a first power threshold the internal combustion engine is started (6), and if the power currently available from the electrical storage device is less than the first power threshold the power currently available from the electrical storage device is determined again (2), according to Claim 1, is repeated until either the internal combustion engine is started or a maximum waiting period is exceeded.

7. Method according to Claim 6,
**characterized in that**
if the maximum waiting period was exceeded, the current load power with which the electrical storage device is loaded by all loads is reduced until the power currently available from the electrical storage device exceeds the first power threshold, whereupon the internal combustion engine is started.

8. Method according to Claim 7,
**characterized in that**
the reduction of the load power is a maximum of 3 kW per second.

9. Method according to at least one of the preceding claims,
**characterized in that**
while the internal combustion engine is started, the maximum load power with which the electrical storage device can be loaded by all loads is limited to a second power threshold.

10. Method according to Claim 9,
**characterized in that**
the second power threshold is determined by multiplication of the power required to start the internal combustion engine and a second safety factor.

11. Method according to Claim 9,
**characterized in that**
the limitation of the maximum load power is slowly withdrawn after starting the internal combustion engine.

12. Method according to at least one of the preceding claims,
**characterized in that**
when the internal combustion engine is started it is accelerated to at least 1000 rpm, preferably to at least 1500 rpm.

## Revendications

1. Procédé pour faire fonctionner un véhicule hybride, lequel comprend un moteur à combustion interne, une machine électrique, un accumulateur électrique ainsi qu'un système de commande,
**caractérisé en ce qu'**une puissance actuellement disponible auprès de l'accumulateur électrique est déterminée (2) par le système de commande quand une première condition de démarrage (1) est satisfaite, et dans le cas où la puissance actuellement disponible auprès de l'accumulateur électrique est supérieure à une première valeur limite de puissance, le moteur à combustion interne est démarré (6), et dans le cas où la puissance actuellement disponible auprès de l'accumulateur électrique est inférieure à la première valeur limite de puissance, la puissance actuellement disponible auprès de l'accumulateur électrique est de nouveau déterminée (2).

2. Procédé selon la revendication 1, **caractérisé en ce que** la première condition de démarrage est satisfaite, lorsque l'état de charge actuel de l'accumulateur électrique est inférieur à une valeur limite de charge.

3. Procédé selon la revendication 1 ou 2,
**caractérisé en ce que** la puissance actuellement disponible auprès de l'accumulateur électrique est déterminée en fonction de la puissance de consommateur actuelle avec laquelle l'accumulateur électrique est chargé par tous les consommateurs.

4. Procédé selon la revendication 3, **caractérisé en ce que** la puissance actuellement disponible auprès de l'accumulateur électrique est déterminée sous la forme de la différence entre la puissance délivrée maximale de l'accumulateur électrique et la puissance de consommateur actuelle avec laquelle l'accumulateur électrique est chargé par tous les consommateurs.

5. Procédé selon la revendication selon au moins l'une des revendications précédentes, **caractérisé en ce que** la première valeur limite de puissance est déterminée par la multiplication d'une puissance nécessaire pour le démarrage du moteur à combustion interne et d'un premier facteur de sécurité.

6. Procédé selon au moins l'une des revendications précédentes, **caractérisé en ce que** la séquence selon laquelle une puissance actuellement disponible auprès de l'accumulateur électrique est déterminée (2), et dans le cas où la puissance actuellement disponible auprès de l'accumulateur électrique est supérieure à une première valeur limite de puissance, le moteur à combustion interne est démarré (6), et dans le cas où la puissance actuellement disponible auprès de l'accumulateur électrique est inférieure à la première valeur limite de puissance, la puissance actuellement disponible auprès de l'accumulateur électrique est de nouveau déterminée (2), selon la revendication 1, est répétée soit jusqu'à ce que le moteur à combustion interne est démarré, soit jusqu'à ce qu'une durée d'attente maximale est dépassée.

7. Procédé selon la revendication 6, **caractérisé en ce que** lorsque la durée d'attente maximale a été dépassée, la puissance de consommateur actuelle avec laquelle l'accumulateur électrique est chargé par tous les consommateurs est réduite jusqu'à ce que la puissance actuellement disponible auprès de l'accumulateur électrique soit supérieure à la première valeur limite de puissance, après quoi le moteur à combustion interne est démarré.

8. Procédé selon la revendication 7, **caractérisé en ce que** la réduction de la puissance de consommateur est au maximum de 3 kW par seconde.

9. Procédé selon au moins l'une des revendications précédentes, **caractérisé en ce que** pendant que le moteur à combustion interne est démarré, la puissance de consommateur maximale avec laquelle l'accumulateur électrique peut être chargé par tous les consommateurs est limitée à une deuxième valeur limite de puissance.

10. Procédé selon la revendication 9, **caractérisé en ce que** la deuxième valeur limite de puissance est déterminée par la multiplication d'une puissance nécessaire pour le démarrage du moteur à combustion interne et d'un deuxième facteur de sécurité.

11. Procédé selon la revendication 9, **caractérisé en ce que** la limitation de la puissance de consommateur maximale est lentement annulée après le démarrage du moteur à combustion interne.

12. Procédé selon au moins l'une des revendications précédentes, **caractérisé en ce que** lorsque le moteur à combustion interne est démarré, celui-ci est accéléré au minimum à 1000 t/min., de préférence au minimum à 1500 t/min.
